# EUROPEAN PATENT SPECIFICATION

(11) **EP 0 719 501 B1**
(45) Date of publication and mention of the grant of the patent: **01.10.1997**
(21) Application number: 95500175.5
(22) Date of filing: 21.12.1995
(51) Int. Cl.: A22B 5/00

(54) **Machine for detaching the shoulder blade from a slaughtered animal**
Vorrichtung zum Auftrennen des Schulterblattes eines Schlachttieres
Dispositif servant à détacher l'omoplate d'un animal abattu

(30) Priority: 27.12.1994 ES 9402639
(43) Date of publication of application: 03.07.1996
(73) Proprietor: Roser Laromaine, Jaime, 17244 Cassa de la Selva (Girona) (ES)
(72) Inventor: Roser Laromaine, Jaime, 17244 Cassa de la Selva (Girona) (ES)
(74) Representative: Ponti Sales, Adelaida

(56) References cited:
- WO-A-91/11912
- FR-A- 2 147 359
- FR-A- 2 513 080

## Description

The present invention relates to a machine for detaching the shoulder blade from a slaughtered animal, comprising a supporting surface for the shoulder, means for holding the shoulder against said surface and means for pulling on the shoulder blade.

### BACKGROUND OF THE INVENTION

It is necessary to detach the shoulder blade from a slaughtered animal in order to make various types of products, such as boned cooked ham.

Detachment of the shoulder blade from a slaughtered animal was until recently carried out in a totally manual way, which calls for considerable effort on the part of the operative implementing the process.

In order to detach the shoulder blade bone, first the tendon fixing it to the bone joint is cut. The bone is then raised and pulled until it is completely lifted. The cartilage attaching the bone to the flesh is then cut and the shoulder blade is detached.

This procedure is excessively slow, since it cannot be carried out continuously for too long by the same operative, due to the tiredness it induces.

Some known machines for detaching the shoulder blade bone from a shoulder comprise a fixed table, on which the shoulder is supported, and a clamp associated to the end of the stem of a vertical hydraulic cylinder, which clamps the shoulder blade and pulls it upwards while the shoulder is kept against the table by holding means. Such a machine is described in document WO-A-91/11912.

These machines have partly solved the problem of the physical effort that was necessary to carry out the operation manually, but they still have a number of drawbacks.

On one hand, when the cylinder pulls the bone in a vertical direction the meat tends to get torn and it doesn't separate neatly from the bone through the veil existing therebetween.

Furthermore, the production that can be obtained with known machines is limited, because there are downtimes that make it impossible to fully exploit their possibilities. This is due to the fact that only one operative can work with the machine, and he must prepare each shoulder and introduce it in the machine, wait for the machine to finish the separating operation, and withdraw the finished shoulder before preparing and introducing the next shoulder; during the steps of preparation of the shoulder, the machine is idle.

### DESCRIPTION OF THE INVENTION

The present invention intends to solve the above mentioned drawbacks, by means of a machine for detaching the shoulder blade from a slaughtered animal that avoids tearing of the meat upon detachment from the bone and therefore allows to profit from a larger quantity of the meat of the shoulder.

Another object of the invention is to provide a machine allowing a high production, and to which shoulders of any shape and dimensions can be supplied continuously; and that is safe in operation, in order to avoid the risk of accidents.

The machine according to the present invention comprises a supporting surface for the shoulder, means for holding the shoulder against said surface and means for pulling on the shoulder blade, and is characterized in that said means for pulling on the shoulder blade comprise an arm hinged near the supporting surface and provided at its free end with a clamp element, said arm being movable between a substantially horizontal position, in which the clamp element grips the shoulder blade, to an inclined position, such that during said movement of the arm the shoulder blade is detached from the shoulder.

The movement of the arm, and particularly of the clamp element, pulls the shoulder blade vertically only in a first part of the movement, while the largest part of the detachment of the bone is carried out in an inclined direction, with a horizontal force component. On one hand, this avoids the need to hold the shoulder at different locations, since all the part of the shoulder that contains the bone to be detached is pressed against the table by the movement of the arm itself; and, on the other hand, the shoulder blade separates neatly from the meat, through the veil existing between them. Thus, the shoulder remains whole and the waste of meat is minimum.

Advantageously, the means to hold the shoulder on the supporting surface comprise a second arm, also hinged near the supporting surface and provided at its free end with a holding element, said second arm being movable from a substantially horizontal position, in which the holding element keeps the shoulder against the supporting surface, to an inclined position, in which the shoulder becomes free.

In an embodiment of this second arm, the holding element engages the bone joint of the shoulder, and is provided with a recess intended to avoid interference with the first arm.

Holding the shoulder through the bone joint is optimum, because it is very near the blade bone to detach.

In one preferred embodiment of the invention, the supporting surface comprises a conveyor belt, means for positioning the shoulder on the belt and means for detecting the position of the shoulder being also provided; preferably, the means for positioning the shoulder include a plurality of pivots, a plurality of centring points and a light beam emitter, and the means for detecting the position of the shoulder comprise first means to detect the passage of the side of the shoulder and second means to detect the passage of each pivot and to actuate said second arm to hold the shoulder and said first arm to pull the shoulder blade.

By providing a conveyor belt as supporting surface for the shoulders the machine achieves a high productivity, and its possibilities can be fully exploited: this is because the belt allows several operatives to work simultaneously preparing shoulders and placing them on the conveyor belt, other operatives performing the finishing operations and withdraw the shoulders from the belt, while the mechanic means of the machine for detaching the shoulder blades work continuously on the shoulders to be processed.

Thanks to the positioning means, the shoulders can be arranged on the belt in the right place to allow the machine to work as quickly as possible without errors in the position of the shoulders.

The first means of detection allow actuation of the means for holding the shoulder of the slaughtered animal and the means for pulling on the shoulder blade of the slaughtered animal only when a shoulder is in place on the belt, while the second means of detection allow the actuation of the means for holding the shoulder of the slaughtered animal and of the means for pulling on the shoulder blade of the slaughtered animal to be made at the right instant, regardless of the dimensions of the shoulders.

According to one aspect of the invention, the machine comprises means for cleaning the conveyor belt, which advantageously comprise a plurality of spray jets arranged on both sides of the lower stretch of the conveyor belt, in a compartment slidably mounted on guides.

This allows fast and easy cleaning of the conveyor belt, automatically and without the need of disassembling it; for maintenance of the cleaning system it is enough to disconnect the supply of cleaning liquid and remove the compartment from the machine.

Preferably the machine comprises a protecting cover, arranged forming a tunnel over the means for holding the shoulder and the means for pulling on the shoulder blade, and comprising two parts, one fixed and the other removable; the light beam emitter is arranged on the fixed part of the cover.

The cover lies over the part of the machine having movable parts, thus avoiding the risk of accidents; the removable part allows easy access to the means for holding the shoulder and the means for pulling on the shoulder blade, for cleaning or maintenance purposes.

The mounting of the light beam emitter on the fixed part of the cover, prevents an accidental movement of the emitter, which could lead to errors in the positioning of the shoulders.

According to a second embodiment of the invention, said supporting surface is constituted by a fixed table over which a protective cover is arranged, covering the means for holding the shoulder, the means for pulling on the shoulder blade and the table, which are accessible by means of a closable opening provided in said protective cover.

This embodiment of the machine has a lower cost, because the table is fixed. Furthermore, machine operation is implemented in a safer manner, preventing access to the means for holding the shoulder of the slaughtered animal and to the means for pulling on the shoulder blade of the slaughtered animal when the machine is in operation.

Advantageously, the opening can be closed by means of a door which moves vertically, such that when the door is open it does not hinder the work of the operative.

### BRIEF DESCRIPTION OF THE DRAWINGS

For a better understanding of all that has been outlined some drawings are included which, schematically and solely by way of non-limiting example, show a practical case of embodiment.

In said drawings,
Figure 1 is a sectioned side elevation view of an embodiment of the machine of the invention;
Figure 2 is a schematic plan view of the machine of figure 1;
Figure 3 is a plan view of a second embodiment of the machine;
Figure 4 is an elevation view of the machine shown in Figure 3;
Figure 5 is a view along section V-V of Figure 4;
   And Figure 6 is a side elevation view in more detail of the cleaning means.

### DESCRIPTION OF A PREFERRED EMBODIMENT

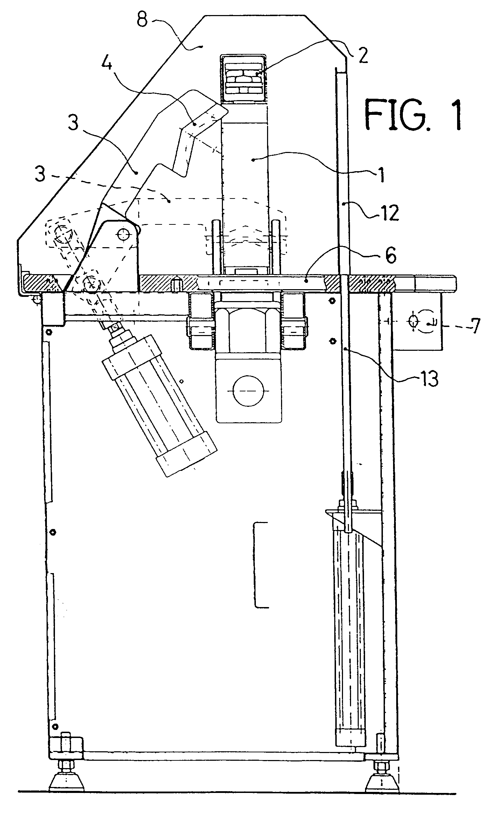

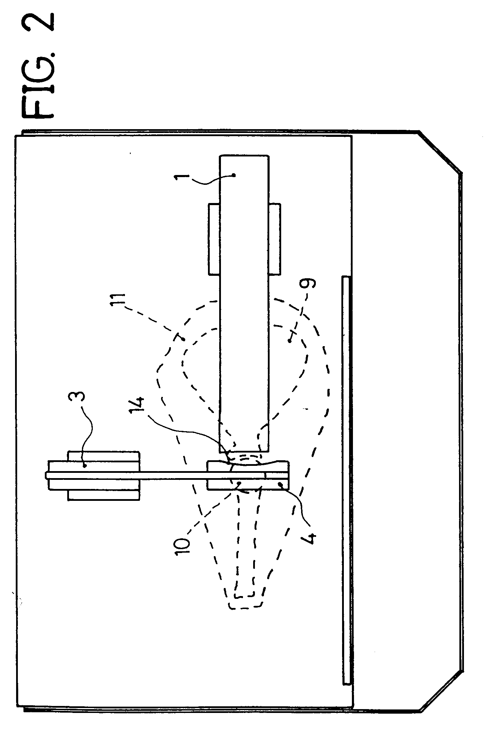

Figures 1 and 2 show the arrangement of the components of an embodiment of the machine according to the invention, which includes a first hinged arm 1 which has a clamp 2 on its front end, a second hinged arm 3 which has a holding element 4 on its front end, a fixed table 6, a button switch 7 which actuates the operation of the machine, and a protective cover 8.

The shoulder 11 is positioned by means of an opening 12 closable by a door 13, that opens and closes vertically. Once the shoulder 11 has been positioned, the machine is actuated by means of the button switch 7. The hinged arms 1, 3 are then placed on the shoulder 11 in such a way that the holding element 4 of the second hinged arm 3 is placed on the bone joint 10. The holding element 4 has a recessed section 14 to prevent the holding element 4 from hindering the action of the first hinged arm 1 as the shoulder blade bone 9 is detached.

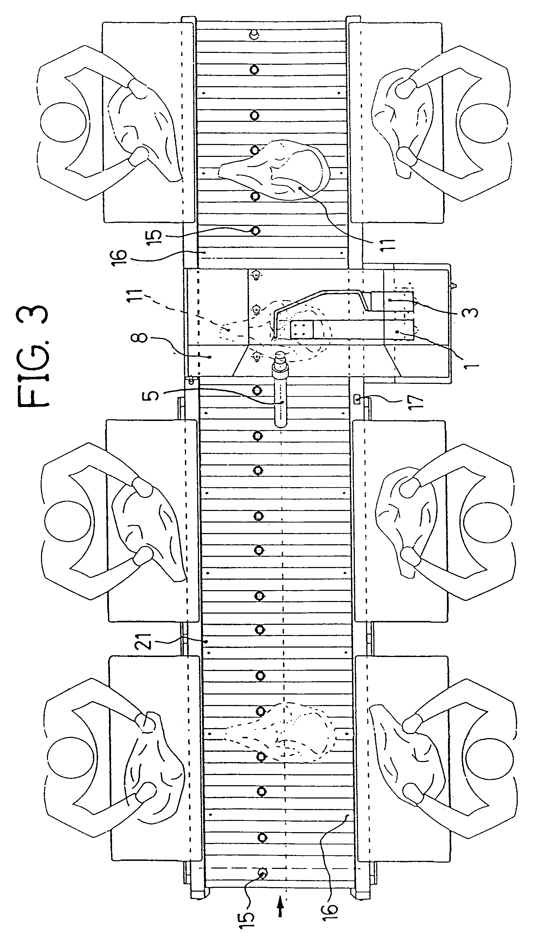

Figures 3 to 5 show the arrangement of a second embodiment of the components of the machine, which includes a conveyor belt 21, and the main steps of the process of detachment of the shoulder blade bone of a slaughtered animal.

This embodiment also includes a plurality of pivots 15, a plurality of centring points 16 and a light emitter 5, which constitute the positioning means.

The assembly formed by the arms 1, 3 and the light emitter 5 is movable along the conveyor belt so that it can be positioned in the right place depending on the number of operatives implementing each function.

The means for detecting the position of the shoulder consist of first means 17 which detect the passage of the side of the shoulder 11 of the slaughtered animal and second means 18 which detect the passage of each pivot 15 and actuate the hinged arms 1, 3. Each pivot 15 has associated thereto, in the lower part of the belt 21, a projecting piece 19 which runs within a channel 20 arranged in the vicinity of the hinged arms 1, 3. The passage of the projecting pieces 19 along this channel is detected by the second detection means 18.

The bone-detaching process is started by an operative, by cutting the tendon which secures the shoulder blade bone 9 to the joint 10, and lift slightly the bone 9. Once the tendon has been cut, the shoulder 11 is placed in the correct position as indicated by the positioning light beam 5, the pivots 15 and the centring points 16.

As the shoulder 11 approaches the hinged arms 1, 3 it is detected by the first detection means 17. Subsequently the second detection means 18 immediately detect the passage of the corresponding pivots 15 and actuate the hinged arms 1, 3. The second detection means 18 actuate the hinged arms 1, 3 only if the first means 17 have detected the passage of the shoulder 11, such that the arms are not actuated every time a pivot passes along them, but only when a shoulder is in place.

The second arm 3 then lowers until the shoulder 11 is held against the surface, following which the first arm 1 immediately lowers and, by means of the clamp 2, grips the shoulder blade bone 9 by its inner side, pulling on it up to a position determined by an adjustable stop piece, whose position depends on the type of shoulder.

Once the first arm 1 reaches its maximum height, the clamp 2 opens and releases the shoulder blade 11. At the same time the second arm 3 starts its ascending movement and the conveyor belt 21 places the shoulder within reach of an operative for the finishing operations, consisting mainly in cutting the cartilage still attaching the bone to the shoulder, and withdrawal of the shoulder from the belt.

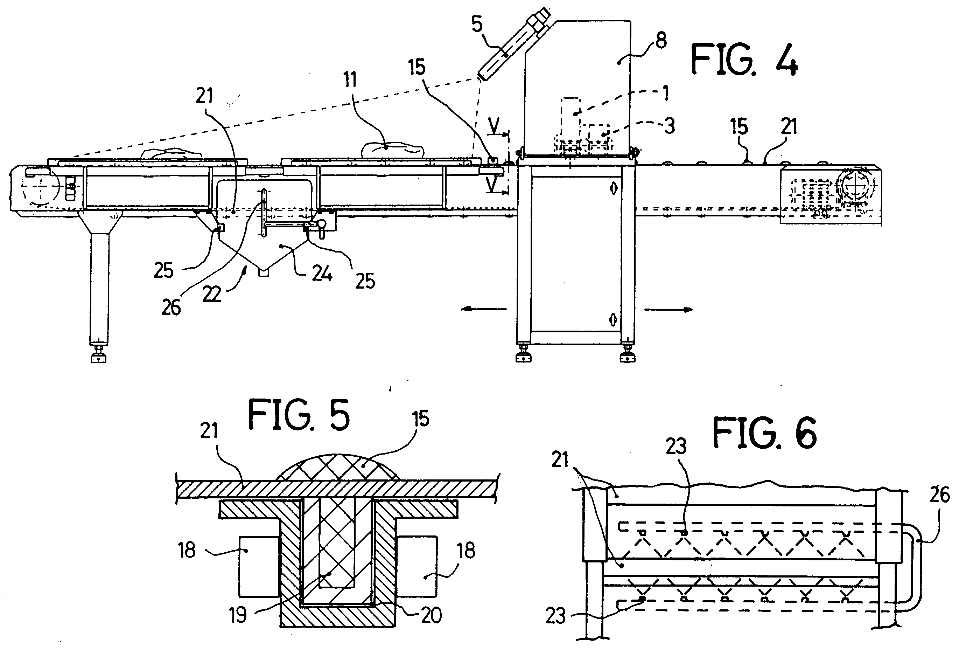

As can seen from Figure 6, in order to clean the conveyor belt 21 the machine has pressure cleaning means 22 with a plurality of spray jets 23, which first apply a cleaning foam and then water. The cleaning means 22 are arranged inside a compartment 24 that can slide along guides 25, which facilitates maintenance operations of the cleaning system.

The spray jets 23 are arranged at both sides of the belt 21, on the lower portion of its path, and are connected to a supply of cleaning liquid through a conduit 26. When the compartment 24 has to be withdrawn, the conduit 26 is easily disengaged from the supply of cleaning liquid and the compartment is withdrawn laterally with respect to the conveyor belt.

## Claims

1. Machine for detaching the shoulder blade from a slaughtered animal, comprising a supporting surface (6,21) for the shoulder (11), means (3) for holding the shoulder against said surface and means (1,2) for pulling on the shoulder blade, characterized in that said means for pulling on the shoulder blade comprise a first arm (1) hinged near the supporting surface (6,21) and provided at its free end with a clamp element (2), said arm being rotatable from a substantially horizontal position, in which the clamp element (2) grips the shoulder blade, to an inclined position, such that during said movement of the arm (1) the shoulder blade is detached from the shoulder.

2. Machine as claimed in claim 1, characterized in that said means to hold the shoulder (11) on the supporting surface (6,21) comprise a second arm (3), also hinged near the supporting surface and provided at its free end with a holding element (4), said second arm (3) being rotatable from a substantially horizontal position; in which the holding element (4) keeps the shoulder against the supporting surface, to an inclined position, in which the shoulder becomes free.

3. Machine as claimed in claim 2, characterized in that the holding element (4) engages the bone joint (10) of the shoulder (11), and is provided with a recess (14) intended to avoid interference with the first arm (1).

4. Machine as claimed in any of claims 1 to 3, characterized in that said supporting surface comprises a conveyor belt (21), means (5,15,16) for positioning the shoulder (11) on said belt and means (17,18) for detecting the position of the shoulder being also provided.

5. Machine as claimed in claim 4, characterized in that the means for positioning the shoulder include a plurality of pivots (15), a plurality of centring points (16) and a light beam emitter (5).

6. Machine as claimed in claims 4 or 5, characterized in that the means for detecting the position of the shoulder (11) comprise first means (17) to detect the passage of the side of the shoulder and second means (18) to detect the passage of each pivot (15) and to actuate said second arm (3) to hold the shoulder and said first arm (1) to pull the shoulder blade.

7. Machine as claimed in any of claims 4 to 6, characterized in that it comprises means (22) for cleaning the conveyor belt (21).

8. Machine as claimed in claim 7, characterized in that said means (22) for cleaning she conveyor belt (21) comprise a plurality of spray jets (23) arranged on both sides of the lower stretch of the conveyor belt (21), in a compartment (24) slidably mounted on guides (25).

9. Machine as claimed in any of claims 4 to 8, characterized in that it comprises a protecting cover (8), arranged forming a tunnel over the means (3) for holding the shoulder and the means (1) for pulling on the shoulder blade, and comprising two parts, one fixed and the other removable.

10. Machine as claimed in claim 9, characterized in that the light beam emitter (5) is arranged on the fixed part of the cover (8).

11. Machine as claimed in any of claims 1 to 3, characterized in that said supporting surface is constituted by a fixed table (6) over which a protective cover (8) is arranged, covering the means (3) for holding the shoulder, the means (1) for pulling on the shoulder blade and the table (6), which are accessible by means of a closable opening (12) provided in said protective cover (8).

12. Machine as claimed in claim 11, characterized in that the opening (12) can be closed by means of a door (13) which moves vertically.

## Patentansprüche

1. Vorrichtung zum Abnehmen des Schulterblattes von einem geschlachteten Tier mit einer Lagerfläche (6, 21) für die Schulter (11), einer Einrichtung (3) zum Halten der Schulter gegen die Fläche und einer Einrichtung (1, 2) zum Ziehen am Schulterblatt, dadurch gekennzeichnet, daß die Einrichtung zum Ziehen am Schulterblatt einen ersten Arm (1) aufweist, der nahe der Lagerfläche (6, 21) angelenkt ist und an seinem freien Ende mit einem Klemmelement (2) versehen ist, wobei der Arm von einer im wesentlichen horizontalen Position, in der das Klemmelement (2) das Schulterblatt greift, derart in eine geneigte Position drehbar ist, daß während der Bewegung des Arms (1) das Schulterblatt von der Schulter abgenommen wird.

2. Vorrichtung nach Anspruch 1, dadurch gekennzeichnet, daß die Einrichtung zum Halten der Schulter (11) auf der Lagerfläche (6, 21) einen zweiten Arm (3) aufweist, der ebenfalls nahe der Lagerfläche angelenkt ist und an seinem freien Ende mit einem Halteelement (4) versehen ist, wobei der zweite Arm (3) von einer im wesentlichen horizontalen Position, in dem das Halteelement (4) die Schulter gegen die Lagerfläche hält, in eine geneigte Position drehbar ist, in der die Schulter frei wird.

3. Vorrichtung nach Anspruch 2, dadurch gekennzeichnet, daß das Halteelement (4) mit der Knochenverbindung (10) der Schulter (11) in Eingriff bringbar ist und mit einer Ausnehmung (14) versehen ist, welche eine Interferenz mit dem ersten Arm (1) vermeidet.

4. Vorrichtung nach einem der Ansprüche 1 bis 3 dadurch gekennzeichnet, daß die Lagerfläche ein Förderband (21), eine Einrichtung (5, 15, 16) zum Positionieren der Schulter auf dem Band sowie eine Einrichtung (17, 18) zum Erfassen der Position der Schulter aufweist.

5. Vorrichtung nach Anspruch 4, dadurch gekennzeichnet, daß die Einrichtung zum Positionieren der Schulter eine Mehrzahl von Drehachsen (15), eine Mehrzahl von Zentrierpunkten (16) sowie einen Lichtstrahlemitter (5) aufweist.

6. Vorrichtung nach Anspruch 4 oder 5, dadurch gekennzeichnet, daß die Einrichtung zum Erfassen der Position der Schulter (11) eine erste Einrichtung zum Erfassen des Durchlaufs der Seite der Schulter sowie eine zweite Einrichtung (18) zum Erfassen des Durchlaufs jeder Drehachse (15) und zum Betätigen des zweiten Arms (3) zum Halten der Schulter und des ersten Arms (1) zum Ziehen am Schulterblatt aufweist.

7. Vorrichtung nach einem der Ansprüche 4 oder 6, dadurch gekennzeichnet, daß eine Einrichtung (22) zum Reinigen des Förderbands (21) vorgesehen ist.

8. Vorrichtung nach Anspruch 7, dadurch gekennzeichnet, daß die Einrichtung (22) zum Reinigen des Förderbands (21) eine Vielzahl von Sprühdüsen (23) aufweist, welche auf beiden Seiten des unteren Spannbereichs des Förderbandes (21) in einem Gehäuse (24), das verschiebbar an Führungen (25) angebracht ist, angeordnet sind.

9. Vorrichtung nach einem der Ansprüche 4 oder 8, dadurch gekennzeichnet, daß sie eine Schutzabdeckung (8) aufweist, die zur Bildung eines Tunnels über der Einrichtung (3) zum Halten der Schulter und der Einrichtung (1) zum Ziehen am Schulterblatt vorgesehen ist und zwei Teile aufweist, von denen eines fest ist und das andere entfernbar ist.

10. Vorrichtung nach Anspruch 9, dadurch gekennzeichnet, daß der Lichtstrahlemitter (5) am festen Teil der Abdeckung (8) angeordnet ist.

11. Vorrichtung nach einem der Ansprüche 1 bis 3, dadurch gekennzeichnet, daß die Lagerfläche durch einen festen Tisch (6) gebildet ist, über dem eine Schutzabdeckung (8) angebracht ist, welche die Einrichtung (3) zum Halten der Schulter, die Einrichtung (1) zum Ziehen am Schulterblatt und den Tisch (6) abdeckt, welche durch eine schließbare Öffnung (12), die in der Schutzabdeckung (8) vorgesehen ist, zugänglich sind.

12. Vorrichtung nach Anspruch 11, dadurch gekennzeichnet, daß die Öffnung (12) mittels einer Tür (13), welche vertikal beweglich ist, verschließbar ist.

## Revendications

1. Machine pour détacher l'omoplate d'un animal abattu, comprenant une surface de support (6,21) pour l'épaule (11), des moyens (3) pour tenir l'épaule contre ladite surface et des moyens (1,2) pour tirer sur l'omoplate, caractérisée en ce lesdits moyens pour tirer sur l'omoplate comprennent un premier bras (1) articulé près de la surface de support (6,21) et muni à son extrémité libre d'un élément de serrage (2), ledit bras étant rotatif depuis une position sensiblement horizontale dans laquelle l'élément de serrage (2) saisit l'omoplate, vers une position inclinée, de sorte que pendant ledit mouvement du bras (1), l'omoplate est détachée de l'épaule.

2. Machine selon la revendication 1, caractérisée en ce que lesdits moyens pour tenir l'épaule (11) sur la surface de support (6,21) comprenne un second bras (3), également articulé près de la surface de support et muni à son extrémité libre d'un élément de retenue (4), ledit second bras (3) étant rotatif depuis une position sensiblement horizontale, dans laquelle l'élément de retenue (4) maintient l'épaule contre la surface de support, vers une position inclinée, dans laquelle l'épaule devient libre.

3. Machine selon la revendication 2, caractérisée en ce que l'élément de retenue (4) coopère avec l'articulation osseuse (10) de l'épaule (11), et est muni d'un évidemment (14) destiné à éviter une interférence avec le premier bras (1).

4. Machine selon l'une quelconque des revendications 1 à 3, caractérisée en ce que ladite surface de support comprend une courroie de convoyeur (21), des moyens (5, 15, 16) pour positionner l'épaule (11) sur ladite courroie et des moyens (17, 18) pour détecter la position de l'épaule étant également prévus.

5. Machine selon la revendication 4, caractérisée en ce que les moyens pour positionner l'épaule incluent une pluralité de pivots (15), une pluralité de points de centrage (16) et un émetteur de rayons lumineux (5).

6. Machine selon l'une quelconque des revendications 4 ou 5, caractérisée en ce que les moyens pour détecter la position de l'épaule (11) comprennent des premiers moyens (17) pour détecter le passage du côté de l'épaule et des second moyens (18) pour détecter le passage de chaque pivot (15) et pour actionner ledit second bras (3) pour tenir l'épaule et ledit premier bras (1) pour tirer l'omoplate.

7. Machine selon l'une quelconque des revendications 4 à 6, caractérisée en ce qu'elle comprend des moyens (22) pour nettoyer la courroie de convoyeur (21).

8. Machine selon la revendication 7, caractérisée en ce que lesdits moyens (22) pour nettoyer la courroie de convoyeur (21) comprennent une pluralité de jets de pulvérisation (23) agencés sur les deux côtés de l'étendue inférieure de la courroie de convoyeur (21), dans un compartiment (24) monté coulissant sur des guides (25).

9. Machine selon l'une quelconque des revendications 4 à 8, caractérisée en ce qu'elle comprend un capot de protection (8), agencé en formant un tunnel sur les moyens (3) pour tenir l'épaule et les moyens (1) pour tirer sur l'omoplate et comprenant deux parties, une fixée et l'autre amovible.

10. Machine selon la revendication 9, caractérisée en ce que l'émetteur de rayons lumineux (5) est agencé sur la partie fixe du capot (8).

11. Machine selon l'une quelconque des revendications 1 à 3, caractérisée en ce que ladite surface de support est constituée par une table fixe (6) sur laquelle un capot de protection (8) est agencé, couvrant les moyens (3) pour tenir l'épaule, les moyens (1) pour tirer sur l'omoplate et la table (6), qui sont accessibles au moyen d'une ouverture obturable (12) prévue dans ledit capot de protection (8).

12. Machine selon la revendication 11, caractérisée en que l'ouverture (12) peut être fermée au moyen d'une porte (13) qui se déplace verticalement.
